# EUROPÄISCHE PATENTANMELDUNG

(11) **EP 2 157 487 A2**
(43) Veröffentlichungstag der Anmeldung: **24.02.2010**
(21) Anmeldenummer: 09010545.3
(22) Anmeldetag: 17.08.2009
(51) Int. Cl.: G05B 9/03, G06F 11/20, G05B 19/042

(54) **Redundantes Steuerungssystem und Verfahren zur sicherheitsgerichteten Ansteuerung von Aktoren**

(30) Priorität: 18.08.2008 DE 102008038131
(71) Anmelder: EAE Ewert Ahrensburg Electronic GmbH, 22926 Ahrensburg (DE)
(72) Erfinder: Risse, Toralf, 01689 Niederau (DE)
(74) Vertreter: Seemann, Ralph

(57) **Zusammenfassung**

Die Erfindung betrifft eine Steuervorrichtung (14) für ein redundantes Steuerungssystem (1), insbesondere für die Bühnentechnik. Die Erfindung betrifft ferner ein redundantes Steuerungssystem (1). Außerdem betrifft die Erfindung ein Verfahren zur sicherheitsgerichteten Ansteuerung von Aktoren (35), insbesondere Antriebsachsen.

Die erfindungsgemäße Steuervorrichtung umfasst wenigstens drei Netzwerkcontroller (16, 17, 18) und wenigstens zwei Prozessoren (21, 22, 26), die sicherheitsgerichtete Signale verarbeiten, wobei wenigstens ein Prozessor (21, 22, 26) die verarbeiteten sicherheitsgerichteten Signale als Steuersignale wenigstens einem Ausgang (23, 25) der Steuervorrichtung (14) zur Weiterleitung an einen Aktor (35) weitergibt, wobei jeweils ein Prozessor (21, 22, 26) je einem Netzwerkcontroller (16-18) eineindeutig zugeordnet ist.

Das erfindungsgemäße redundante Steuerungssystem umfasst eine Bedienebene (10), eine Serverebene (2), in der wenigstens zwei Server (11, 12, 13) vorgesehen sind, mittels der sicherheitsgerichtete Signale erfasst und/oder verarbeitet werden, und eine Steuerebene (3), in der wenigstens ein die von den Servern (11-13) gesendeten sicherheitsgerichteten Signale in Steuersignale für einen Aktor (35) umwandelnde Steuervorrichtung (14) vorgesehen ist.

Das erfindungsgemäße Verfahren zeichnet sich dadurch aus, dass dieses mit einer Steuervorrichtung versehen ist, die eingangsseitig drei Netzwerkcontroller (16-18) aufweist, die über ein dreikanaliges Netzwerk (43, 44, 45) mit drei Servern (11-13) einer dreikanaligen Serverebene (2) verbunden sind, wobei die von den Servern (11-13) ausgegebenen Signale zumindest zweikanalig in der Steuervorrichtung (14) verarbeitet werden und in Steuersignale für den Aktor (35) umgewandelt werden und dem Aktor (35) wenigstens einkanalig zur Verfügung gestellt werden.

## Beschreibung

Die Erfindung betrifft eine Steuervorrichtung für ein redundantes Steuerungssystem, insbesondere für die Bühnentechnik. Die Erfindung betrifft ferner ein redundantes Steuerungssystem sowie ein Verfahren zur sicherheitsgerichteten Ansteuerung von Aktoren, insbesondere Antriebsachsen, insbesondere für die Bühnentechnik.

In der Bühnentechnik ist es notwendig, Elemente der Bühne, wie beispielsweise Antriebsachsen, Fahrwagen, Hebegeräte, Winden, Leuchtenanhänger, Aufzüge, Lifte, Förder- und Hubeinrichtungen und dergleichen zu steuern bzw. anzutreiben. Es handelt sich hierbei üblicherweise um sicherheitsgerichtete Steuervorrichtungen und sicherheitsgerichtete Antriebe. Bei derartigen Vorrichtungen und Systemen wird zertifizierte Hardware verwendet, die relativ kostenintensiv ist. Gerade in der Bühnentechnik sind Steuerungen und Antriebe, die sicherheitsgerichtet sind und damit ein Auftreten gefährlicher Zustände verhindern, sehr wichtig. In der ISO-Norm, ISO 13849-1, "Sicherheitsgerichtete Teile von Steuerungen" werden fünf Kategorien für das Leistungsvermögen sicherheitsgerichteter Steuerungen definiert.

Aus DE 100 30 329 C2 ist ein redundantes Steuerungssystem mit einem ersten und einem zweiten Steuerrechner und mit zumindest einer Peripherieeinheit bekannt, die über ein Bussystem mit den Steuerrechnern verbunden ist. Die beiden Steuerrechner übertragen zyklisch wechselnde Lebenszeichen an die Peripherieeinheit. Diese überprüft, ob innerhalb einer vorgebbaren Zeitdauer ein Lebenszeichenwechsel aufgetreten ist und schaltet bei Ausbleiben eines Wechsels auf den jeweils anderen Steuerrechner zur Ausführung der Steuerungsaufgabe um. Die einzelnen Bauteile aus DE 100 30 329 C1 müssen demgemäß sicherheitsgerichtet zertifizierte Bauteile sein, so dass diese auch relativ kostenintensiv sind.

Es ist Aufgabe der vorliegenden Erfindung, eine Steuervorrichtung, ein Steuerungssystem und ein Verfahren zur sicherheitsgerichteten Ansteuerung von Aktoren anzugeben, die eine Alternative zu bekannten sicherheitsgerichteten Lösungen darstellen. Insbesondere ist es Aufgabe, eine kostengünstige Steuervorrichtung und ein kostengünstiges Steuerungssystem anzugeben, mittels der ein sehr sicherer Betrieb bzw. eine sehr sichere Ansteuerung von Aktoren ermöglicht ist und auch ein entsprechendes sicheres Verfahren anzugeben.

Gelöst wird diese Aufgabe durch eine Steuervorrichtung für ein redundantes Steuerungssystem, insbesondere für die Bühnentechnik, umfassend wenigstens drei Netzwerkcontroller und wenigstens zwei Prozessoren, die sicherheitsgerichtete Signale verarbeiten, wobei wenigstens ein Prozessor die verarbeiteten sicherheitsgerichteten Signale als Steuersignale wenigstens einem Ausgang der Steuervorrichtung zur Weiterleitung an einen Aktor weitergibt, wobei jeweils ein Prozessor je einem Netzwerkcontroller eineindeutig zugeordnet ist.

Im Rahmen der Erfindung umfasst der Begriff Aktor insbesondere auch die Begriffe Antriebsachse, Fahrwagen, Hubgerät, Winde, Aufzug, Lift, Förder- und Hubeinrichtung, Kettenzug, Elektrozug, Manipulator, elektrischer und hydraulischer Antrieb, insbesondere für die Bühnentechnik.

Durch die erfindungsgemäße Steuervorrichtung ist es möglich, parallel gleiche Signale in den wenigstens zwei Prozessoren zu verarbeiten, wobei die aus den Prozessoren ausgehenden Steuersignale entweder unmittelbar verglichen werden können bzw. nach Rückmeldung von Messsignalen des sich an die Steuervorrichtung anschließenden Aktors sehr sicher festgestellt werden kann, ob korrekte Steuersignale an den Aktor weitergegeben wurden und diese auch korrekt ausgeführt wurden. Unter einer eineindeutigen Zuordnung wird im Rahmen der Erfindung verstanden, dass im Betrieb Signale nur zwischen den jeweiligen eineindeutig zugeordneten Prozessoren und Netzwerkcontrollern gesendet werden. Hierbei kann im Betrieb die eineindeutige Zuordnung auch geändert werden zu einer zwischen anderen Prozessoren und Netzwerkcontrollern.

Wenn abhängig von wenigstens einem vorgebbaren Parameter eine Umschaltung der eineindeutigen Zuordnung wenigstens eines Netzwerkcontrollers zu einem Prozessor auf einen weiteren Netzwerkcontroller zu diesem Prozessor oder einem anderen Prozessor ermöglicht ist, können bei Auftreten eines Fehlers sehr schnell und, insbesondere in Echtzeit, unterbrechungsfrei bzw. im Wesentlichen unterbrechungsfrei Steuersignale dem Aktor weitergegeben werden.

Vorzugsweise sind wenigstens drei Prozessoren vorgesehen, so dass eine vorgesehene Redundanz noch erhöht werden kann.

Wenn insbesondere vorzugsweise für die Umschaltung, insbesondere für jeden Prozessor, ein elektronischer Schalter vorgesehen ist, kann eine sehr schnelle Umschaltung geschehen, so dass eine unterbrechungsfreie bzw. im Wesentlichen unterbrechungsfreie Ansteuerung des Aktors bzw. Bewegung des angetriebenen Teils des Aktors ermöglicht ist.

Die Aufgabe wird ferner durch ein redundantes Steuerungssystem, insbesondere für die Bühnentechnik, insbesondere mit einer Bedienebene, mit einer Serverebene, in der wenigstens zwei Server vorgesehen sind, mittels der sicherheitsgerichtete Signale erfasst und/oder verarbeitet werden, und mit einer Steuerebene, in der wenigstens eine die von den Servern gesendeten sicherheitsgerichteten Signale in Steuersignale für einen Aktor umwandelnde Steuervorrichtung vorgesehen ist.

Vorzugsweise ist eine vorstehend beschriebene erfindungsgemäße Steuerungsvorrichtung in dem redundanten Steuerungssystem vorgesehen. Die Server sind hierbei vorzugsweise keine sicherheitsgerichteten Server, sondern übliche Industrie-PCs bzw. Industrie-Server, die deutlich kostengünstiger sind als sicherheitsgerichtete Server. Unter "Server" wird im Rahmen der Erfindung insbesondere ein Computer, ein Rechner, ein Industrie-PC und ähnliches verstanden. Die Bedienebene, die vorzugsweise vorgesehen ist, umfasst eine, vorzugsweise in der Bühnentechnik, übliche Bedienebene, die eine entsprechende Bedienung, beispielsweise mit einem Joystick, ermöglicht. In den Servern werden beispielsweise Fahrkurven für Aktoren berechnet und entsprechende berechnete Signale der Steuervorrichtung zugeführt, die diese in Steuersignale für einen Aktor umwandelt.

Vorzugsweise sind drei Server in der Serverebene vorgesehen, die jeweils eineindeutig mit einem Netzwerkcontroller der Steuervorrichtung verbunden sind. Hierdurch ist eine hochgradige Redundanz und Ausfallsicherheit des Steuerungssystems ermöglicht. Vorzugsweise sind die Server über wenigstens ein Netzwerk miteinander direkt verbunden, so dass Daten zwischen den Servern ausgetauscht werden können, die insbesondere zum Überprüfen der Funktionalität der jeweiligen Server benutzt werden können, beispielsweise das Übersenden von Lebenszeichen, und auch dazu dienen können, einen Reserveserver mit zu verarbeitenden Daten, die auch in den anderen Servern verarbeitet werden, zu versehen.

Wenn vorzugsweise die Server im Wesentlichen alle Funktionen parallel ausführen, wobei die von zwei Servern an die Steuervorrichtung abgegebenen sicherheitsgerichteten Signale wenigstens teilweise gleich sind und in der Steuervorrichtung weiterverarbeitet werden, während der dritte Server wenigstens teilweise die gleichen sicherheitsgerichteten Signale als Reserveserver generiert, kann eine sehr schnelle Umschaltung von einem fehlerhaften Server auf den Reserveserver geschehen, so dass sich insgesamt ein hochverfügbares System ergibt, mit dem eine unterbrechungsfreie bzw. im Wesentlichen unterbrechungsfreie Ansteuerung eines Aktors ermöglicht ist. Vorzugsweise gibt ein erster Server die zur Weiterverarbeitung vorgesehenen Signale von der Steuervorrichtung einem dritten Server, der dann der Reserveserver ist, weiter.

Vorzugsweise wird die Zuordnung des ersten Servers, des zweiten Servers und des dritten Servers rotierend oder alternierend geändert, so dass der erste Server auch die Funktion des zweiten Servers oder dritten Servers übernimmt und der zweite Server die Funktion des ersten Servers oder dritten Servers und der dritte Server die Funktion des ersten oder zweiten Servers.

Die Aufgabe wird ferner durch ein Verfahren zur sicherheitsgerichteten Ansteuerung von Aktoren, insbesondere Antriebsachsen, insbesondere für die Bühnentechnik, mit einer Steuervorrichtung gelöst, die eingangsseitig wenigstens drei Netzwerkcontroller aufweist, die über ein wenigstens dreikanaliges Netzwerk mit wenigstens drei Servern einer wenigstens dreikanaligen Serverebene verbunden sind, wobei die von den Servern ausgegebenen Signale zumindest zweikanalig in der Steuervorrichtung verarbeitet werden und in Steuersignale für den Aktor umgewandelt werden und dem Aktor wenigstens einkanalig zur Verfügung gestellt werden.

Hiermit ist eine sehr sichere Verfahrensführung zur Ansteuerung von Aktoren möglich.

Wenn vorzugsweise für die zweikanalige Verarbeitung die Signale eines ersten Servers einem ersten Kanal in der Steuervorrichtung und die Signale eines zweiten Servers einem zweiten Kanal in der Steuervorrichtung, insbesondere eineindeutig, zugeordnet werden, ist die Verarbeitung in der Steuervorrichtung auch redundant und damit sehr sicher.

Wenn vorzugsweise bei fehlerhaftem Betrieb eines ersten oder zweiten Servers, bei fehlerhaftem Betrieb eines Netzwerkkanals, der mit dem ersten oder zweiten Server verbunden ist, und/oder bei fehlerhaftem Betrieb eines ersten oder zweiten Netzwerkcontrollers eingangsseitig der Steuervorrichtung ein dritter Server die Funktion des Servers übernimmt, der fehlerhaft arbeitet, ein dritter Netzwerkkanal die Funktion des fehlerhaft arbeitenden Netzwerkkanals übernimmt und/oder ein dritter Netzwerkcontroller eingangsseitig der Steuervorrichtung die Funktion des fehlerhaften Netzwerkcontrollers übernimmt, ist die Hochverfügbarkeit des Verfahrens in sehr hohem Maße gegeben.

Vorzugsweise geschieht die Übernahme der Funktion eines fehlerhaften Servers, eines fehlerhaften Netzwerkkanals und/oder eines fehlerhaften Netzwerkcontrollers eingangsseitig der Steuervorrichtung ohne Unterbrechung oder im Wesentlichen ohne Unterbrechung der Ansteuerung des Aktors. Hierdurch ist die Hochverfügbarkeit des Verfahrens noch erhöht.

Überdies ist gemäß einer Ausgestaltung des Verfahrens vorgesehen, dass, vorzugsweise in der Startphase, ein Prozessor zunächst seinen eigenen Kanal initialisiert und danach einen weiteren Kanal, insbesondere einen Reservekanal, initialisiert. Außerdem initialisiert der andere Prozessor ebenfalls seinen eigenen Kanal, so dass nach dem Start alle drei Netzwerke initialisiert sind und fortan die Netzwerke mit den Servern kommunizieren.

Vorzugsweise sind in der Betriebsphase die wenigstens drei Server, die wenigstens drei Netzwerkkanäle und die wenigstens drei Netzwerkcontroller aktiv und verarbeiten insbesondere alle die gleichen Signale bzw. im Wesentlichen die gleichen Signale oder wenigstens teilweise die gleichen Signale, so dass ein Umschalten auf einen neuen Server, einen neuen Netzwerkkanal und/oder auf einen neuen Netzwerkcontroller sehr schnell und ohne neue Initialisierung beim Umschalten möglich ist. Die verarbeiteten gleichen Signale sind im Rahmen der Erfindung insbesondere diejenigen, die für die Ansteuerung des Aktors benötigt werden.

Vorzugsweise erzeugen in der Betriebsphase die wenigstens drei Server parallel alle für die Steuerung des Aktors notwendigen Signale und geben diese in die den jeweiligen Servern zugeordneten Kanälen des Netzwerkes ab. Bevorzugterweise werden die in den Servern erzeugten Signale in den Servern selbst zwischengespeichert werden. Überdies werden diese Signale über die wenigstens drei aktiven Kanäle des Netzwerkes an die wenigstens drei Netzwerkcontroller, vorzugsweise ohne nennenswerte Unterbrechung, übertragen.

Im Rahmen der Erfindung ist es ebenfalls beispielsweise als Alternative denkbar, dass die Signale aus den wenigstens drei Kanälen des Netzwerkes in den wenigstens drei Netzwerkcontrollern der Steuervorrichtung zwischengespeichert werden. Die Zwischenspeicherung der Signale in den Netzwerkcontrollern der Steuervorrichtung geschieht so, dass die Signale des ersten Servers beispielsweise in dem ersten Netzwerkcontroller zwischengespeichert werden und die Signale des zweiten Servers in dem zweiten Netzwerkcontroller usw. Auch hierdurch erhöht sich die Verfügbarkeit und Ausfallsicherheit des Systems.

Vorzugsweise erkennen die Server selbstständig, ob eine Verbindung zu den Prozessoren der Steuereinheit besteht, so dass Daten direkt gesendet und empfangen werden können, oder ob die Sendedaten zwischenspeichert und die Empfangsdaten z.B. von einem Masterserver empfangen werden.

Wenn jeder der wenigstens zwei Kanäle in der Steuervorrichtung einen Prozessor aufweist, der die eingehenden Signale in Steuersignale verarbeitet, wobei es sich hierbei insbesondere auch um die gleichen bzw. wenigstens teilweise die gleichen Signale handelt, ist auch ein hochverfügbares sicheres Verfahren möglich.

Vorzugsweise ist ein Computerprogramm mit Programmcodemitteln vorgesehen, die angepasst sind, um ein erfindungsgemäßes Verfahren, das vorstehend beschrieben wurde, auszuführen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein schematisches Blockdiagramm eines erfindungsgemäßen Steuerungssystems mit einer erfindungsgemäßen Steuervorrichtung,
- Fig. 2: eine andere erfindungsgemäße Ausführungsform einer erfindungsgemäßen Steuervorrichtung, in der nur ein Teil der verwendeten Elemente dargestellt ist.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

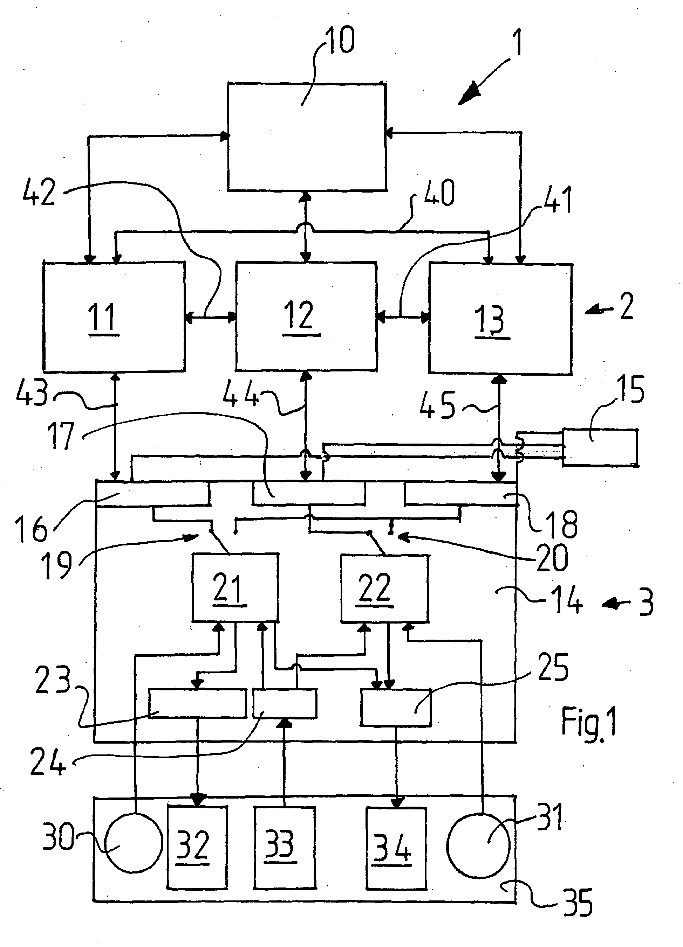

Fig. 1 zeigt ein Blockschaltbild eines erfindungsgemäßen Steuerungssystems 1. Das erfindungsgemäße Steuerungssystem 1 weist eine Bedienebene 10, eine Serverebene 2 und eine Steuerebene 3 auf. Unterhalb der Steuerebene 3 ist ein Aktor, in diesem Beispiel als Antriebsachse 35 ausgebildet, dargestellt.

In der Steuerebene 3 ist eine Steuervorrichtung 14 vorgesehen, die Signale von den Servern 11, 12 und 13 über ein Netzwerk, das mit drei Kanälen 43, 44, 45 ausgebildet ist, bzw. über drei Netzwerke 43, 44, 45, erhält und in Netzwerkcontrollern 16, 17 und 18 zwischenspeichert.

Die Bedienebene 10 kann ein Bedienpult aufweisen, das über beispielsweise Kabelverbindungen oder über Funkverbindungen, beispielsweise auch über WLAN mit dem ersten Server 11, dem zweiten Server 12 und dem dritten Server 13 in Kommunikation steht. Die Server 11, 12 und 13 sind über Netzwerke 40, 41 und 42 über Ethernet kommunikativ miteinander verbunden. Die Verbindung zwischen den Servern 11, 12 und 13 mit den Netzwerkcontrollern 16, 17 und 18 geschieht über ein Echtzeit Ethernet-Netzwerk, das unter der Bezeichnung "Power Link" bekannt ist. Die Serverebene 2 und die Steuerebene 3 sind beabstandet voneinander.

In der Steuerebene 3 können mehrere Steuervorrichtungen 14 bzw. 15 vorgesehen sein, die auch gleich ausgebildet sein können. Die von den Servern 11, 12 und 13 empfangenen Signale können durch die Netzwerkcontroller 16, 17, 18 der Steuervorrichtung 14 zu entsprechenden Netzwerkcontrollern der Steuervorrichtung 15 durchgeschleift werden. Die Steuervorrichtung 15 kann dann einen weiteren Aktor, der nicht dargestellt ist, ansteuern. So können beispielsweise bis zu einhundert Steuervorrichtungen seriell miteinander gekoppelt sein und außerdem können weitere Steuervorrichtungen, die seriell miteinander verbunden sind, parallel zueinander von den Servern 11, 12 und 13 angesteuert werden.

In der Steuervorrichtung 14 sind nach den Netzwerkcontrollern 16, 17, 18 elektronische Schalter 19 und 20 vorgesehen, die in der Fig. 1 jeweils in der linken Position geschaltet sind, so dass eine eineindeutige Verbindung zwischen dem Prozessor 21 und dem Netzwerkcontroller 16 sowie dem Prozessor 22 und dem Netzwerkcontroller 17 vorgesehen ist. Die entsprechend zwischengespeicherten Daten der Server 11 und 12 werden dann über die Netzwerkcontroller 16 und 17 den Prozessoren 21 und 22 zur Verfügung gestellt. Bei diesen Daten oder Signalen handelt es sich beispielsweise um Fahrkurven für den Aktor 35. Es kann auch ein Stoppsignal vorgesehen sein.

Um aus den Fahrkurven entsprechende Steuersignale für den Aktor 35 zu generieren, berechnet der Prozessor 21 aus den Signalen vom Server 11 entsprechende Steuersignale, die dem Steuersignalausgang 23 zugeführt werden. Diese Steuersignale werden in den Aktor 35 dem Regler 32 zugeführt, der beispielsweise ein Frequenzumrichter ist und die Geschwindigkeit eines Motors der Antriebsachse 35 regelt. Der Prozessor 22 kann beispielsweise ein Stoppsignal entsprechend so weiter verarbeiten, dass dem Schaltblockausgang 25, der beispielsweise ein logisches UND darstellen kann, eine logische 0 (Null) übermittelt wird. Wenn sowohl das Signal, das von dem Prozessor 21 dem Schaltblockausgang 25 zur Verfügung gestellt wird, als auch das Signal des Prozessors 22 eine logische 1 (Eins) ist, wird dieses Signal als logische 1 (Eins) dem Aktor 35 als digitales Ansteuersignal 34 zur Verfügung gestellt. Ansonsten erhält der Block "digitale Ansteuerung" 34 eine logische 0 (Null), womit dann beispielsweise ein Stoppsignal generiert wird, mit dem Bremsen angesteuert werden.

In dem Schaltblockausgang 25 werden verschiedene digitale Signale parallel verarbeitet und an den Block 34 weitergegeben. So kann beispielsweise ein Relais bzw. ein Schütz angesteuert werden oder beispielsweise Rastspangen geschaltet werden. Entsprechend können digitale oder analoge Messsignale 33 des Aktors 35 einem Verteiler 24 in der Steuervorrichtung 14 zur Verfügung gestellt werden, die die entsprechenden Signale in beide Prozessoren 21 und 22 zur Weiterverarbeitung weiterleiten.

Es sind außerdem zur Sicherheit zwei Positionsgeber 30 und 31 im Aktor 35 vorgesehen, die entsprechend übereinstimmende Signale der Position des Aktors bzw. eines durch den Aktor betriebenen Motors, also beispielsweise den Winkel der Antriebsachse 35, an die Prozessoren 21 und 22 weitergeben. Diese leiten die entsprechenden vom Aktor 35 empfangenen Signale über die Netzwerkcontroller 16 und 17 an die Server 11 und 12 weiter, die miteinander verbunden über die Leitung 42 bzw. das Netzwerk 42 die entsprechenden Signale auf Gleichheit bzw. Akzeptanz vergleichen. Bei zu großen Unterschieden wird die Antriebsachse 35 stillgelegt. Der Server 11 gibt auch die entsprechenden von dem von der Antriebsachse 35 erhaltenen Signale an den Server 13 weiter, der auch beispielsweise eine entsprechende Fahrkurve berechnet und diese in einem internen Speicher ablegt. Mit Aktivierung der Verbindung übertragen der Server 13 über das Netzwerk 45 und der Netzwerkcontroller 18 zu z.B. dem Prozessor 22 die zuletzt im Server 13 gespeicherten aktuellen Daten an diesen Prozessor.

Bei Problemen mit einem Server 11 oder 12 kann nun im Betrieb im Wesentlichen ohne Unterbrechung über die elektronischen Schalter 19 und 20, was im Folgenden noch genauer beschrieben wird, von dem Server 11 oder 12 auf den Server 13 umgeschaltet werden, so dass die gleichen Daten zur Ansteuerung des Aktors 35 auch über den Server 13 in den Netzwerkcontroller 18 dem jeweiligen Prozessor zur Verfügung gestellt werden. Hierdurch ist eine Hochverfügbarkeit des redundanten Steuerungssystems gegeben.

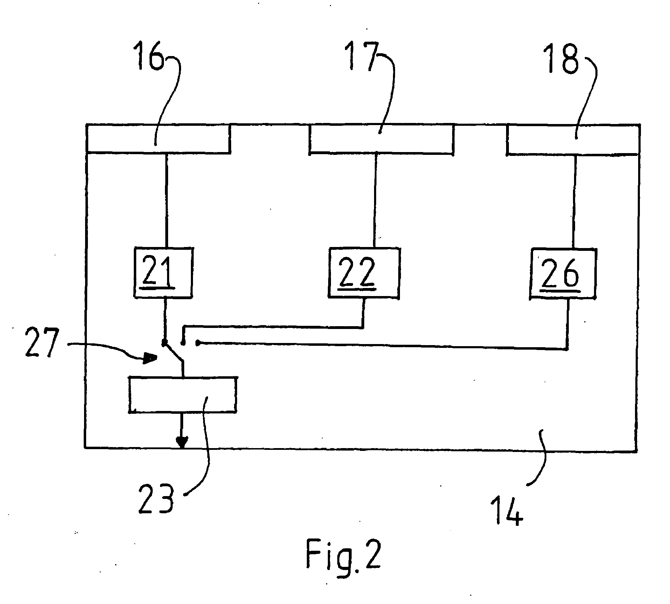

Die Steuervorrichtung 14 umfasst somit als Hauptkomponenten zwei Prozessoren 21, 22. Es können auch, wie in Fig. 2 dargestellt ist, drei Prozessoren 21, 22 und 26 vorgesehen sein. Es sind ferner vorgesehen zwei oder drei Anschlüsse für ein Ethernet-Powerlink, wobei drei Anschlüsse in einer hochverfügbaren Variante gemäß Fig. 1 vorgesehen sind und zwei oder drei Netzwerkcontroller 16 bis 18, die selbst auch Prozessoren aufweisen. Die drei Netzwerkcontroller 16-18 gemäß Fig. 1 stellen auch die hochverfügbare Variante der Steuervorrichtung 14 dar.

Es sind nicht dargestellte sechzehn digitale Eingänge vorgesehen, wobei die Eingänge nach der Anschlussklemme aufgeteilt werden und jeder Prozessor 21, 22 bzw. auch 26 intern über völlig getrennte Eingänge verfügt. Außerdem sind zehn digitale Ausgänge, beispielsweise bei dem Schaltblockausgang 25, vorgesehen, wobei jeder Prozessor 21, 22 separate Ausgänge haben kann, die in Reihe geschaltet werden können, bevor sie auf eine Anschlussklemme geführt werden. Jeder Prozessor 21, 22 bzw. 26 kann auch so ausgestaltet sein, dass die eigenen Ausgänge zurückgelesen werden, um Fehler festzustellen.

Es ist ferner ein analoger Eingang (ein Teil des Verteilers 24) vorgesehen, der nach einer nicht dargestellten Anschlussklemme aufgeteilt ist und für jeden Prozessor intern über getrennte Eingänge verfügbar ist. Außerdem ist ein analoger Ausgang (Steuersignalausgang 23) in diesem Ausführungsbeispiel der Fig. 1 dargestellt, der mit dem Prozessor 21 verbunden ist. Es können auch zwei analoge Ausgänge vorgesehen sein, die dann mit den beiden Prozessoren verbunden sind bzw. für jeden Prozessor ist dann ein analoger Ausgang vorgesehen. Es kann auch ein analoger Ausgang wie in Fig. 2 vorgesehen sein, wobei ein entsprechender Schalter 27 dazu dient, auszuwählen, von welchem Prozessor 21, 22 oder 26 das analoge Ausgangssignal ausgegeben wird.

Es ist für jeden Prozessor in dem Ausführungsbeispiel gemäß Fig. 1 ein separater Positionseingang vorgesehen, der Daten von einem absoluten Positionsgeber 30 bzw. 31 erhält und außerdem ein Anschluss für eine Notbedienung und für Programmupdates. Hierbei handelt es sich intern um zwei völlig getrennte serielle Schnittstellen für jeden Prozessor.

Die Steuervorrichtung 14 ist durch verschiedene Maßnahmen, wie Redundanz, Checkroutine beim Einschalten und im Betrieb, z.B. Eingangstest, Ausgangstest, RAM- und ROM-Tests, Mehrzwecküberwachung und ähnlichem als sicherheitsgerichtete Baugruppe ausgeführt und hat die letztendliche Kontrolle über den Antrieb bzw. die Antriebsachse 35.

Es kann auch ein separat getriggerter Watchdog vorgesehen sein, der in der Fig. 1 allerdings nicht dargestellt ist. Die Steuervorrichtung 14 liest alle Signale, die von der Antriebsachse 35 kommen, ein und steuert alle Ausgänge zur Antriebsachse 35 an und hält die Kommunikationsverbindung zu den Servern 12 und 13. Durch die verwendete Mikroprozessortechnik in Verbindung mit dem Echtzeit Ethernet Powerlink Netzwerk 43-45 finden alle Abläufe in einem sehr kurzen Regelzyklus von beispielsweise weniger als 4,1 ms statt. Lediglich im Notbetrieb ist die Steuervorrichtung 14 eine unabhängig wirkende Steuereinheit und wird dann ohne Server und Netzwerke mit einfachen Funktionen als Insellösung zum Antrieb der Antriebsachse 35 betrieben.

Bindeglied für die hochdynamischen Prozesse ist im Ausführungsbeispiel gemäß Fig. 1 das Echtzeit Ethernet Netzwerk Powerlink, das mit den Bezugszeichen 43, 44 und 45 versehen ist. Die Steuervorrichtungen 14 und 15 werden als dezentrale Steuervorrichtungen betrieben, wobei die wesentlichen Vorgaben im Hinblick auf die Ansteuerung und Positionierung der Antriebsachse 35 in den Servern 11, 12 und 13 abläuft bzw. berechnet wird. In den Servern werden nämlich beispielsweise Fahrkurven berechnet, und zwar auf Basis der Vorgaben aus der Bedienebene 10 und in Abhängigkeit von den von der Antriebsachse 35 erhaltenen Signalen. Außerdem werden Rückmeldungen zur Bedienebene 10 gegeben.

Im Folgenden wird zunächst der Verfahrensablauf der Steuerung in einem System mit zwei Servern 11, 12 und zwei Netzwerken bzw. :Netzwerkkanälen 43, 44 beschrieben. Die Server 11 und 12 sind vollständig redundant aufgebaut und führen bis auf wenige Ausnahmen die gleichen Funktionen parallel durch, also jeder Server führt im Wesentlichen die gleichen Berechnungen durch. Entsprechend sind auch die Kanäle 43 und 44 des Ethernet Powerlinks redundant aufgebaut.

Eine Synchronisierung zwischen den Servern findet beispielsweise vorzugsweise nur beim Start jeder Bewegung, die die Antriebsachse 35 ausführen soll, statt. Es werden regelmäßig bzw. kontinuierlich Lebenszeichen bzw. Lebensbits sowohl zwischen den Servern 11, 12 als auch zwischen den Servern 11, 12 und der Steuervorrichtung 14 hin und her gesendet. Im normalen Ablauf werden alle Signale der Steuervorrichtungen 14, 15 von den Servern 11, 12 gelesen und ausgewertet. Je nach Status der Bedienebene erfolgt eine Ansteuerung zu den Steuervorrichtungen 14, 15. Hierbei kann zwischen statischen digitalen Signalen, analogen Eingangssignalen und dem Signal für die Positionierung (Positionssignalen und Sollwertausgangssignal) unterschieden werden.

Die digitalen statischen Signale werden dabei im Bereich der Eingänge noch in permanente Sicherheitssignale und prozessabhängige Signale unterschieden. Die permanenten Sicherheitssignale weisen z.B. digital immer eine 1 auf, ansonsten liegt ein Fehler vor. Bei den prozessabhängigen Signalen kann der Status wechseln.

Für eine Ansteuerung der Antriebsachse 35 erfolgt zunächst eine Anwahl in der Bedienebene 10. Hierbei erfolgt auch die Übertragung von Positionierwerten wie Ziele, Stützpunkte, Geschwindigkeiten und Rampen, die durch die Server 11 und 12 bzw. im Ausführungsbeispiel gemäß Fig. 1 auch 13 berechnet werden, an die Steuervorrichtung 14 bzw. 15 weitergegeben werden. Sofern die digitalen Sicherheitssignale ok sind, also auf 1 liegen, erfolgt die Einschaltung des Reglers 32. Sobald ein Start der Fahrt über beispielsweise Joysticks in der Bedienebene an Bedienpulten erfolgt, werden Bremsen gelöst, es erfolgt eine Synchronisierung des Starts zwischen Server 11 und 12. Sofern alle Daten bzw. Signale sich entsprechen, führt jede Steuervorrichtung die Steuerung eines Sollwertausgangssignales und das Rücklesen des Positionssignales der Antriebsachse 35 auf der vorgegebenen Fahrkurve durch. Erkennt ein Server hierbei nicht zulässige Abweichungen in der gewünschten Kurve, erfolgt eine sofortig Stillsetzung der Antriebsachse 35.

Über die Steuervorrichtung 14 erfolgt indirekt bzw. mittelbar eine permanente Synchronisierung der Server 11 und 12. Wenn beide Server in den digitalen Ausgängen eine Freischaltung vornehmen, kann die Antriebsachse 35 Bewegungen ausführen. Dieses geschieht dadurch, dass den Prozessoren 21 und 22 eine logische 1 (Eins) übermittelt wird, die auf den Schaltblockausgang 25 weitergegeben wird und von dort in die Antriebsachse 35 weitergegeben wird. Bei dem analogen Sollwert, der dem Regler 32 zur Verfügung gestellt wird, wurde im Ausführungsbeispiel der Fig. 1 auf eine Veroderung der Sollwerte von den beiden Kanälen über die Prozessoren 21 und 22 verzichtet, in diesem Fall steuert nur der erste Kanal bzw. der Prozessor 21 die Ansteuerung der Antriebsachse im Hinblick auf das analoge Sollsignal, das beispielsweise der Geschwindigkeit des anzusteuernden Motors entspricht.

Es ist allerdings noch eine Variante möglich, bei der auch der Prozessor 22 das analoge Solisignal generiert und bei einer Fehlfunktion des Prozessors 21 dieses Signal dann dem Regler 32 zur Verfügung gestellt wird. Dieses kann beispielsweise durch einen elektronischen Schalter geschehen analog der Ausführungsform in Fig. 2.

In der Ausführungsform gemäß Fig. 1 erfolgt die permanente Überwachung dadurch, dass jeder Prozessor 21 und 22 und auch die entsprechenden Server 11 und 12 unabhängige Positionsrückmeldungen über die Positionsgeber 30 und 31 erhalten, so dass eine sichere Funktionalität gegeben ist. Die entsprechenden Messsignale, die von der Antriebsachse 35 der Steuervorrichtung 14 zur Verfügung gestellt werden, können beispielsweise Lastzustände der Achse sein oder die Temperatur eines Motors. Diese werden ständig überwacht und bei Überschreitung von Grenzwerten wird die Bewegung gestoppt.

Die zusätzliche Funktionalität in der hochverfügbaren Variante gemäß dem Ausführungsbeispiel der Fig. 1, bei der zusätzlich noch ein dritter Kanal vorgesehen ist, also ein dritter Server 13 sowie ein dritter Netzwerkkanal 45 und ein dritter Netzwerkcontroller 18 sieht nun so aus, dass an sich die vorher genannten Funktionalitäten des Steuerungsablaufs mit zwei Servern 11 und 12, zwei Netzwerken 43 und 44 und zwei Netzwerkcontrollern 16 und 17 an sich erhalten bleiben. Das redundante Steuerungssystem wird allerdings durch den dritten Server 13, ein drittes Netzwerk 45 bzw. einen dritten Netzwerkkanal 45 und wie erwähnt einen dritten Netzwerkcontroller 18 erweitert.

Jeder Prozessor 21 bzw. 22 kann über einen elektronischen Schalter 19 bzw. 20 auf den dritten Netzwerkcontroller 18 und damit den dritten Kanal bzw. den dritten Server 13 über die Verbindung des Netzwerkkanals 45 umschalten. Hierbei kann das Prinzip gelten, wer zuerst kommt, bekommt den Zugriff. Die Umschaltung erfolgt automatisch, sobald beispielsweise die Kommunikation zum derzeit verbundenen Kanal, sei es der Netzwerkcontroller 16 oder 17, der Netzwerkkanal 43 oder 44 oder der Server 11 oder 12, gestört ist, und zwar beispielsweise mehr als drei Netzwerkzyklen. Der Netzwerkzyklus der Echtzeit Ethernet Netzwerks Powerlink ist beispielsweise 4,1 ms.

Die Steuerung der Umschaltung erfolgt in der Steuervorrichtung 14 selbst. Basis der schnellen Umschaltung ohne eine Funktionsunterbrechung ist die ständige Bereitschaft und nahezu vollwertige Funktion des dritten Kanals also des dritten Servers 13, des dritten Netzwerkkanals 45 und des dritten Netzwerkcontrollers 18.

Dafür wird zunächst in der Startphase des Steuerungssystems jedes Netzwerk 43, 44 und 45 als auch 40, 41 und 42 initialisiert. Ein Prozessor 21 bzw. 22 initialisiert dabei beispielsweise zwei Kanäle. Hierzu wird beispielsweise der Schalter 19 nach Initialisierung des ersten Kanals, umfassend den Netzwerkcontroller 16 und den Netzwerkkanal 43 als auch beispielsweise den Server 11, umgeschaltet, so dass der dritte Kanal (Netzwerkcontroller 18, Netzwerkkanal 45 sowie der dritte Server 13) initialisiert wird. Nach dieser Initialisierung läuft der Reservekanal, also der dritte Kanal (Server 13, Netzwerkkanal 45 und Netzwerkcontroller 18) permanent mit. Es erfolgt ein permanenter Datenaustausch mit den anderen Servern oder einem anderen Server, wobei diese Daten über die Steuervorrichtung 14 und auch die Steuervorrichtung 15 übermittelt werden. Entsprechend erfolgt auch in dem Reservekanal bzw. dritten Kanal eine Erkennung von Fehlern.

Auf der Serverseite bzw. in der Serverebene 2 wird der dritte Server 13 permanent vom beispielsweise ersten Server 11 mit Daten versorgt. Der dritte Server 13 wird so dazu veranlasst, so zu tun, als ob dieser den Prozess aktiv steuerte und auch aktiv Fehler erkennt und anzeigt. Im Moment des Umschaltens durch den elektronischen Schalter 19 oder 20 verfügt der Reserveserver 13 über die aktuellen Daten und gibt ohne Unterbrechung Signale an die Steuervorrichtung 14 und auch an die Steuervorrichtung 15 sowie weitere Steuervorrichtungen weiter.

In diesem hochverfügbaren System mit drei Servern 11, 12 und 13 ist vorzugsweise eine Erweiterung zur Koordinierung der Server vorgesehen. Im Initialisierungsmodus und/oder permanent erfolgt eine Festlegung des Serverstatus. Es werden ein Masterserver, ein Slaveserver und ein Reserveserver zugeordnet. Das System ist hierbei rotierend, was soviel bedeutet, dass im störungsfreien Betrieb jeder Server einmal jede Funktion (Master, Slave, Reserveserver) hat. Dies hat den Vorteil, dass aktiv immer die vollwertige Funktion aller Kanäle bzw. aller Komponenten des redundanten Steuerungssystems 1 getestet werden. Bei der Initialisierung wird außerdem festgelegt, welcher Server bei Störungen welche Rolle übernimmt. Die Server überwachen permanent den Status der anderen Server und auch den Status des Powerlink Netzwerkes bzw. der Powerlink Netzwerkkanäle 43, 44 und 45. Bei Problemen wechseln die jeweiligen Server in die zugewiesenen Rollen (Master, Slave und Reserveserver). Diesen Wechsel sollten immer zwei Server beschließen, um so Fehler zu vermeiden. Außerdem wird der fehlerhafte Server als Reserveserver geschaltet.

Sofern an sich alle Server ohne Fehler arbeiten und ein Server nur für sich eine Funktionsstörung oder Funktionsstörungen in der Kommunikation mit einer Steuervorrichtung 14, 15 feststellt, setzt sich dieser Server selbst als Reserveserver ein, indem er den kompletten Powerlink Netzwerkkanal trennt, so dass alle angeschlossenen Steuervorrichtungen 14, 15 auf den vorherigen Reserveserver umschalten.

Jeder Prozessor 21, 22 bzw. 26 wird vom Zyklus des Ethernet Powerlink Netzwerkes 43, 44, 45 getriggert. Dieser Zyklus beträgt beispielsweise 4,1 ms. Mit dem Abschluss des Buszyklus von 4,1 ms wird das Programm der Prozessoren 21, 22, 26 angetriggert und läuft dann in weniger als 4,1 ms durch. Über ein zusätzliches Verfahren in den Prozessoren 21, 22, 26 wird überwacht, ob der Trigger innerhalb der gewünschten Zeit von 4,1 ms kommt. Kommt dieser nicht innerhalb von beispielsweise drei Zyklen oder sind die Daten nicht korrekt verschlüsselt, wird sofort auf das vorhandene Reservenetzwerk umgeschaltet. Aus diesem Grund kommen nur unmerkliche Abweichungen in einer laufenden Fahrbewegung der Antriebsachse 35 zustande. Es ist auch möglich, dass die Server eine Umschaltung einzelner Steuervorrichtungen 14 bzw. 15 vornehmen, falls keine korrekten Daten übermittelt wurden.

Als Aufgaben, die ein entsprechendes redundantes Steuerungssystem aufweisen, ist die Abarbeitung von Fahrkurven und deren Überwachung, die Gruppenbildung von Achsen, ein Achs-Notaus und ähnliche Funktionalitäten zu nennen. Gerade bei hochdynamischen Bewegungen auf der Bühne, wie Wellen- oder Figurenfahrten, sind Übertragungszeiten der Netzwerke im Rechenprozess bei herkömmlichen sicherheitsgerichteten Steuervorrichtungen sehr begrenzt. Der dezentrale Aufbau des erfindungsgemäßen Steuerungssystems führt dazu, dass auch sehr aufwändige Fahrten sicher und schnell durchgeführt werden können.

Fig. 2 zeigt noch eine Alternative einer erfindungsgemäßen Steuervorrichtung 14, bei der drei Prozessoren 21, 22, 26 jeweils direkt mit den Netzwerkcontrollern 16, 17 und 18 verbunden sind. Die von den Prozessoren 21, 22, 26 berechneten und bei ordnungsgemäßer Funktion gleichen Steuersignale werden zum Steuersignalausgang 23 geführt, wobei nur die Signale eines Prozessors tatsächlich dem Steuersignalausgang 23 übermittelt werden. Bei Störung eines Kanals umfassend beispielsweise Server 11, Netzwerkkanal 43, Netzwerkcontroller 16 und Prozessor 21 oder entsprechend Server 12, Netzwerkkanal 44, Netzwerkcontroller 17 und Prozessor 22 bzw. Server 13, Netzwerkkanal 45, Netzwerkcontroller 18 und Prozessor 26 kann eine entsprechende Umschaltung mit dem elektronischen Schalter 27 geschehen. Um eine möglichst unterbrechungsfreie Funktion der Antriebsachse 35 vorzusehen, können in den Leitungen von den Prozessoren 21, 22 und 26 zu dem elektronischen Schalter 27 Zwischenspeicher für die Steuersignale vorgesehen sein. Diese sind allerdings in Fig. 2 nicht dargestellt.

In diesem Zusammenhang wird ergänzend angefügt, dass die Funktion der Steuervorrichtung 14 zur Ansteuerung der Achse neben dem Steuersignalausgang 23 auch aus dem Schaltblockausgang 25 (vgl. Fig. 1) bzw. dessen digitalen Ausgängen besteht. In entsprechender ähnlicher Weise wird die Ansteuerung des Schaltblockausganges 25 erfolgen, was in Fig. 2 nicht dargestellt ist. Hierbei wird bei dem Schaltblockausgang 25 dann - im Unterschied zum Steuersignalausgang 23 - ein 2 aus 3 Verfahren angewendet, d.h. zwei der drei Prozessoren 21, 22 und 26 liefern ein, vorzugsweise positives, Signal, um ein positives Signal am Schaltblockausgang 25 anliegen zu haben. Solange unter Verwendung eines 2 aus 3 Verfahrens zwei der drei Kanäle 11, 43, 16, 21 oder 12, 44, 17, 22 oder 13, 45, 18, 26 ein positives Signal in den Schaltblockausgang 25 geben, gibt dieser auch ein positives Signal an die digitalen Ansteuersignale 34 weiter. Ein Kanal der drei Kanäle kann ohne weitere Auswirkungen hierbei ein negatives Signal liefern.

Alle genannten Merkmale, auch die den Zeichnungen allein zu entnehmenden, werden allein und in Kombination als erfindungswesentlich angesehen.

### Bezugszeichenliste

- 1: Steuerungssystem
- 2: Serverebene
- 3: Steuerebene
- 10: Bedienebene
- 11: erster Server
- 12: zweite Server
- 13: dritter Server
- 14: Steuervorrichtung
- 15: Steuervorrichtung
- 16: Netzwerkcontroller
- 17: Netzwerkcontrolier
- 18: Netzwerkcontroller
- 19: elektronischer Schalter
- 20: elektronischer Schalter
- 21, 22: Prozessor
- 23: Steuersignalausgang
- 24: Verteiler
- 25: Schaltblockausgang
- 26: Prozessor
- 27: elektronischer Schalter
- 30, 31: Positionsgeber
- 32: Regler
- 33: Messsignal (digital/analog)
- 34: digitale Ansteuersignale
- 35: Antriebsachse
- 40,41,42: Netzwerk
- 43, 44, 45: Netzwerkkanal

## Patentansprüche

1. Steuervorrichtung (14) für ein redundantes Steuerungssystem (1), insbesondere für die Bühnentechnik, umfassend wenigstens drei Netzwerkcontroller (16, 17, 18) und wenigstens zwei Prozessoren (21, 22, 26), die sicherheitsgerichtete Signale verarbeiten, wobei wenigstens ein Prozessor (21, 22, 26) die verarbeiteten sicherheitsgerichteten Signale als Steuersignale wenigstens einem Ausgang (23, 25) der Steuervorrichtung (14) zur Weiterleitung an einen Aktor (35) weitergibt, wobei jeweils ein Prozessor (21, 22, 26) je einem Netzwerkcontroller (16-18) eineindeutig zugeordnet ist.

2. Steuervorrichtung (14) nach Anspruch 1, **dadurch gekennzeichnet, dass** abhängig von wenigstens einem vorgebbaren Parameter eine Umschaltung der eineindeutigen Zuordnung wenigstens eines Netzwerkcontrollers (16-18) zu einem Prozessor (21, 22, 26) auf einen weiteren Netzwerkcontroller (16-18) zu diesem Prozessor (21, 22, 26) oder einem anderen Prozessor (21, 22, 26) ermöglicht ist.

3. Steuervorrichtung nach Anspruch 1 oder 2, **dadurch gekennzeichnet, dass** wenigstens drei Prozessoren (21, 22, 26) vorgesehen sind.

4. Steuervorrichtung nach Anspruch 2 oder 3, **dadurch gekennzeichnet, dass** für die Umschaltung, insbesondere für jeden Prozessor (21, 22, 26), ein elektronischer Schalter (19, 20, 27) vorgesehen ist.

5. Redundantes Steuerungssystem (1), insbesondere für die Bühnentechnik, insbesondere mit einer Bedienebene (10), mit einer Serverebene (2), in der wenigstens zwei Server (11, 12, 13) vorgesehen sind, mittels der sicherheitsgerichtete Signale erfasst und/oder verarbeitet werden, und mit einer Steuerebene (3), in der wenigstens eine die von den Servern (11-13) gesendeten sicherheitsgerichteten Signale in Steuersignale für einen Aktor (35) umwandelnde Steuervorrichtung (14), insbesondere nach einem der Ansprüche 1 bis 4, vorgesehen ist.

6. Steuerungssystem (1) nach Anspruch 5, **dadurch gekennzeichnet, dass** drei Server (11-13) in der Serverebene (2) vorgesehen sind, die jeweils eineindeutig mit einem Netzwerkcontroller (16-18) der Steuervorrichtung (14) verbunden sind, wobei insbesondere die Server (11-13) über wenigstens ein Netzwerk (40, 41, 42) miteinander direkt verbunden sind.

7. Steuerungssystem nach Anspruch 5 oder 6, **dadurch gekennzeichnet, dass** die Server (11-13) im Wesentlichen alle Funktionen parallel ausführen, wobei die von zwei Servern (11, 12) an die Steuervorrichtung (14) abgegebenen sicherheitsgerichteten Signale wenigstens teilweise gleich sind und in der Steuervorrichtung (14) weiterverarbeitet werden, während der dritte Server (13) wenigstens teilweise die gleichen sicherheitsgerichteten Signale als Reserveserver generiert, wobei insbesondere ein erster Server (11) die zur Weiterverarbeitung vorgesehen Signale von der Steuervorrichtung (14) einem dritten Server (13) weitergibt.

8. Verfahren zur sicherheitsgerichteten Ansteuerung von Aktoren (35), insbesondere Antriebsachsen, insbesondere für die Bühnentechnik, mit einer Steuervorrichtung (14), die eingangsseitig wenigstens drei Netzwerkcontroller (16-18) aufweist, die über ein wenigstens dreikanaliges Netzwerk (43, 44, 45) mit wenigstens drei Servern (11-13) einer wenigstens dreikanaligen Serverebene (2) verbunden sind, wobei die von den Servern (11-13) ausgegebenen Signale zumindest zweikanalig in der Steuervorrichtung (14) verarbeitet werden und in Steuersignale für den Aktor (35) umgewandelt werden und dem Aktor (35) wenigstens einkanalig zur Verfügung gestellt werden.

9. Verfahren nach Anspruch 8, **dadurch gekennzeichnet, dass** für die zweikanalige Verarbeitung die Signale eines ersten Servers (11) einem ersten Kanal (16, 21) in der Steuervorrichtung (14) und die Signale eines zweiten Servers (12) einem zweiten Kanal (17, 22) in der Steuervorrichtung (14) zugeordnet werden, wobei insbesondere bei fehlerhaftem Betrieb eines ersten oder zweiten Servers (11, 12), bei fehlerhaftem Betrieb eines Netzwerkkanals (43, 44), der mit dem ersten oder zweiten Server (11, 12) verbunden ist und/oder bei fehlerhaftem Betrieb eines ersten oder zweiten Netzwerkcontrollers (16, 17) eingangsseitig der Steuervorrichtung (14) ein dritter Server (13) die Funktion des Servers (11,12) übernimmt, der fehlerhaft arbeitet, ein dritter Netzwerkkanal (45) die Funktion des fehlerhaft arbeitenden Netzwerkkanals (43, 44) übernimmt und/oder ein dritter Netzwerkcontroller (18) eingangsseitig der Steuervorrichtung (14) die Funktion des fehlerhaften Netzwerkcontrollers (16, 17) übernimmt, wobei insbesondere die Übernahme der Funktion eines fehlerhaften Servers (11, 12), eines fehlerhaften Netzwerkkanals (43, 44) und/oder eines fehlerhaften Netzwerkcontrollers (16, 17) eingangsseitig der Steuervorrichtung (14) ohne Unterbrechung oder im Wesentlichen ohne Unterbrechung der Ansteuerung des Aktors (35) geschieht.

10. Verfahren nach Anspruch 8 oder 9, **dadurch gekennzeichnet, dass**, vorzugsweise in der Startphase, ein Prozessor (21) zunächst seinen eigenen Kanal (16, 43, 11) initialisiert und danach einen weiteren Kanal (18, 45, 13), insbesondere einen Reservekanal (18, 45, 13), initialisiert.

11. Verfahren nach einem der Ansprüche 8 bis 10, **dadurch gekennzeichnet, dass** in der Betriebsphase die wenigstens drei Server (11-13), die wenigstens drei Netzwerkkanäle (43-45) und die wenigstens drei Netzwerkcontroller (16-18) aktiv sind.

12. Verfahren nach einem der Ansprüche 8 bis 11, **dadurch gekennzeichnet, dass** in der Betriebsphase die wenigstens drei Server (11-13) parallel alle für die Steuerung des Aktors (35) notwendigen Signale erzeugen und in die den jeweiligen Servern (11-13) zugeordneten Kanälen (43-45) des Netzwerkes abgeben, wobei insbesondere die in den Servern (11-13) erzeugten Signale in den Servern (11-13) selbst zwischengespeichert werden.

13. Verfahren nach einem der Ansprüche 8 bis 12, **dadurch gekennzeichnet, dass** die Server (11-13) selbständig erkennen, ob eine Verbindung zu den Prozessoren (21, 22) der Steuereinheit (14, 15) besteht.

14. Verfahren nach einem der Ansprüche 8 bis 13, **dadurch gekennzeichnet, dass** jeder der wenigstens zwei Kanäle (16-18; 21, 22, 26) in der Steuervorrichtung (14) einen Prozessor (21, 22, 26) aufweist, der die eingehenden Signale in Steuersignale verarbeitet.

15. Computerprogramm mit Programmcodemitteln, die angepasst sind, um das Verfahren nach einem der Ansprüche 8 bis 14 auszuführen.
